Europäisches Patentamt

(19) European Patent Office

Office européen des brevets

(11) Numéro de publication : **0 110 896**
**B1**

(12) **FASCICULE DE BREVET EUROPÉEN**

(45) Date de publication du fascicule du brevet :
**11.12.85**

(21) Numéro de dépôt : **83901385.1**

(22) Date de dépôt : **18.05.83**

(86) Numéro de dépôt international :
**PCT/FR 83/00095**

(87) Numéro de publication internationale :
**WO/8304235 (08.12.83 Gazette 83/28)**

(51) Int. Cl.⁴ : **B 63 H   9/06**, B 62 B 15/00,
B 63 B 35/82

(54) VOILURE A USAGE SPORTIF ET ENGIN COMPOSITE S'Y RAPPORTANT.

(30) Priorité : **25.05.82 FR 8209102**

(43) Date de publication de la demande :
**20.06.84 Bulletin 84/25**

(45) Mention de la délivrance du brevet :
**11.12.85 Bulletin 85/50**

(84) Etats contractants désignés :
**AT BE CH DE FR GB LI LU NL SE**

(56) Documents cités :
**EP-A- 0 070 673**
**WO-A-79 /010 77**
**WO-A-82 /030 53**
**FR-A- 2 457 213**
**US-A- 2 319 999**

(73) Titulaire : **DEBARGE, Philippe**
**T.C.F., 2, quai de la Conférence**
**F-75008 Paris (FR)**

(72) Inventeur : **DEBARGE, Philippe**
**T.C.F., 2, quai de la Conférence**
**F-75008 Paris (FR)**

(74) Mandataire : **Bouju, André**
**38 Avenue de la Grande Armée**
**F-75017 Paris (FR)**

## Description

La présente invention concerne une voiture à usage sportif destinée à permettre à l'utilisateur des évolutions très variées tant sur terre que sur eau, en particulier lorsqu'elle est employée conjointement avec un support mobile destiné à recevoir cet utilisateur — de manière à constituer avec ladite voiture un engin composite —.

On connaît déjà les planches à voile caractérisées par l'association d'une planche et d'une voile sensiblement triangulaire manœuvrée à force par l'utilisateur et qui prend appui sur un point d'ancrage de la planche. Ces engins ne permettent que des évolutions limitées.

On connaît également l'association d'une voile du type spinnaker munie d'une tuyère et d'une paire de skis de neige, la voile étant fixée aux poignets et aux chevilles de l'utilisateur qui chausse les skis. Cette association permet seulement des sauts en vol plané freiné dans les descentes à ski.

Dans le cadre principalement des sports nautiques, on a imaginé d'employer la force du vent pour permettre à l'utilisateur à la fois des effets de propulsion ou de vol par sustentation aérodynamique selon l'orientation d'une voilure par rapport au vent selon une proposition publiée après la date de dépôt de la présente invention, WO82/03053, cette voile pouvant être orientée dans l'espace, indépendamment du support de l'utilisateur. Toutefois, dans les réalisations connues de ce type, la voilure, par exemple une aile en V, est relativement lourde et d'un maniement malaisé. De plus son développement en largeur est tel qu'en pratique elle ne peut occuper toutes les positions souhaitables et en particulier être fortement inclinée sur la verticale ou reliée à la planche en engageant l'extrémité du bord d'attaque de l'aile dans un réceptacle prévu à cet effet.

Le but de la présente invention est de réaliser une voilure très maniable permettant de passer rapidement d'une position verticale de propulsion à une position horizontale de sustentation et inversement sans risque de toucher l'eau.

Suivant l'invention, la voilure à usage sportif, manœuvrable à la main pour permettre la propulsion et/ou le vol par sustentation aérodynamique selon l'orientation de ladite voilure en fonction du vent et par rapport à un support mobile pour l'utilisateur permettant le glissement ou le roulement sur une surface, tel qu'une planche à voile, est caractérisée en ce qu'elle est du genre multiplan et comprend au moins deux ailes décalées l'une par rapport à l'autre, les bords d'attaque de celles-ci étant sensiblement parallèles.

Une telle disposition permet d'obtenir une surface totale de voilure importante tout en étant d'un encombrement réduit ce qui permet à l'utilisateur de manier aisément cette voilure dans les diverses configurations d'utilisation en propulsion et/ou en sustentation sans risque de toucher la surface portante telle que le sol ou l'eau.

D'une manière avantageuse la voilure selon l'invention comporte deux ailes formant biplan. Cette réalisation est de construction simple et économique.

Selon une version préférée de l'invention, les deux ailes sont décalées l'une par rapport à l'autre dans un sens transversal relativement à leurs bords d'attaque.

Cette disposition permet une utilisation optimale des deux ailes évitant le déventement d'une aile par la présence de l'autre en avant du vent.

Par ailleurs, grâce à cette disposition, il a été observé de façon surprenante un accroissement notable de la force d'action du vent sur l'ensemble des deux ailes par rapport à l'addition des forces appliquées sur chacune des deux ailes prises isolément.

D'une manière avantageuse les deux ailes ont sensiblement la même surface.

Ceci permet de simplifier la réalisation industrielle donc d'en réduire le coût tout en simplifiant l'assemblage par l'utilisateur, puisque les deux ailes sont ainsi interchangeables.

Selon une version intéressante de l'invention, l'une des deux ailes a une envergure sensiblement plus grande que l'autre.

Cette disposition permet d'accroître l'efficacité de la voilure sans en augmenter notablement le poids.

Dans l'utilisation nautique, il est avantageux que l'une au moins des ailes soit réalisée en matière à flottabilité positive telle qu'une mousse de plastique conformée en feuille. Ce choix permet lorsque la voilure se trouve dans l'eau lors du départ ou lors d'une chute, d'éviter qu'une grande quantité d'eau soit à déplacer lorsque l'utilisateur veut la sortir de l'eau, les voilures ordinaires ayant tendance à s'enfoncer profondément dans l'eau. De plus, la sortie de l'eau est facilitée du fait que l'une des voiles sera toujours hors de l'eau.

Selon une version préférée, les deux ailes sont reliées par une armature rigide assurant un positionnement relatif constant, cette armature comportant des moyens de préhension pour l'utilisateur.

Cette armature rigide permet une manipulation particulièrement aisée. Il suffit en effet que l'utilisateur applique sur cette armature des efforts de traction selon une seule orientation globale, à la manière de la traction sur un fil de cerf-volant.

Selon une réalisation particulièrement intéressante, le support mobile de la voilure comporte un dispositif de positionnement et de réglage destiné à coopérer avec l'une des extrémités d'une barre engagée dans le bord d'attaque de l'une des ailes de la voilure.

Ce dispositif permet au choix de l'utilisateur et sans effort particulier, soit d'associer la voilure au support mobile tel qu'une planche à la manière d'une voile classique liée à un mât fixé au support mobile, soit de dissocier la voilure du dispositif et de l'orienter dans les trois dimensions afin de rechercher un effet de sustentation. Cette disposition permet, par ailleurs, des virements de bord particulièrement rapides et sûrs, une utilisation par vent faible et moyen plus efficace ainsi qu'une meilleure remontée au près.

D'autres particularités et avantages de l'invention apparaîtront encore dans la description qui va suivre.

Aux dessins annexés, donnés à titre d'exemples illustratifs et non limitatifs :

la figure 1 est une vue en élévation d'une planche à voilure biplan conforme à l'invention, en position d'utilisation,

la figure 1 A est une vue en perspective à échelle agrandie du détail A de la figure 1,

la figure 2 est une vue analogue à la figure 1, la voilure étant dissociée de la planche,

la figure 3 est une vue en perspective d'un exemple de réalisation de la voilure selon l'invention,

la figure 4 représente la même voilure vue en coupe suivant le plan IV-IV de la figure 3,

la figure 5 est une vue de profil d'un ski nautique pouvant être équipé d'une voilure selon l'invention,

la figure 6 représente une vue de l'avant du même ski nautique,

la figure 7 montre la voilure en sustentation,

la figure 8 représente une planche à roues utilisée avec une voilure biplan selon l'invention,

la figure 9 est un schéma montrant une variante du support de voilure.

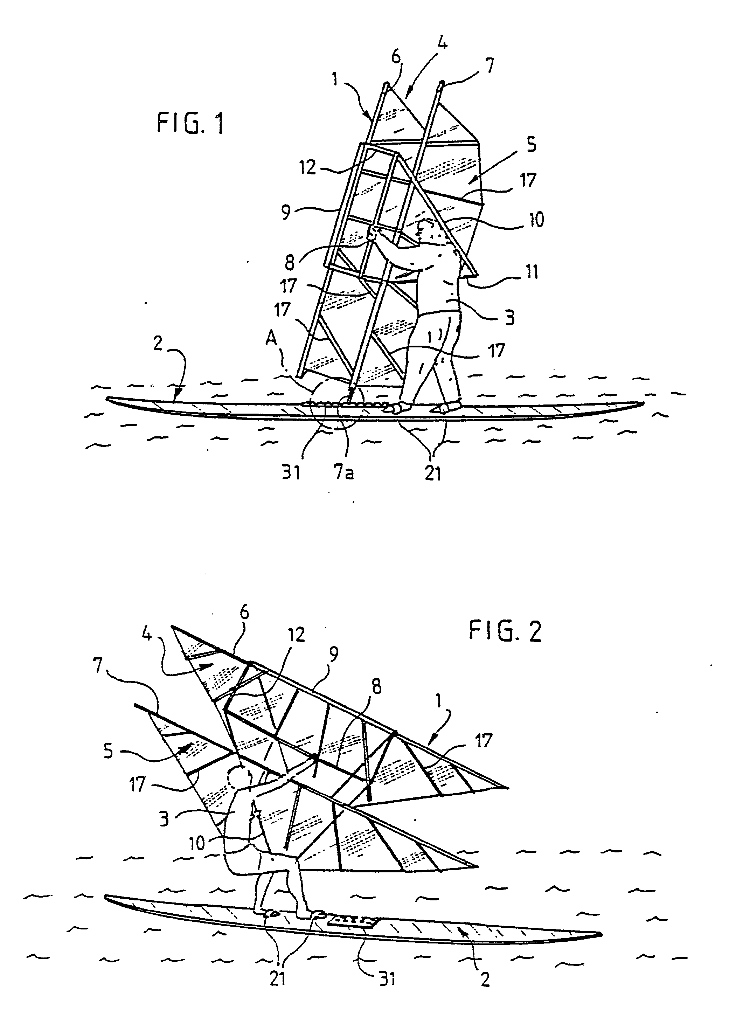

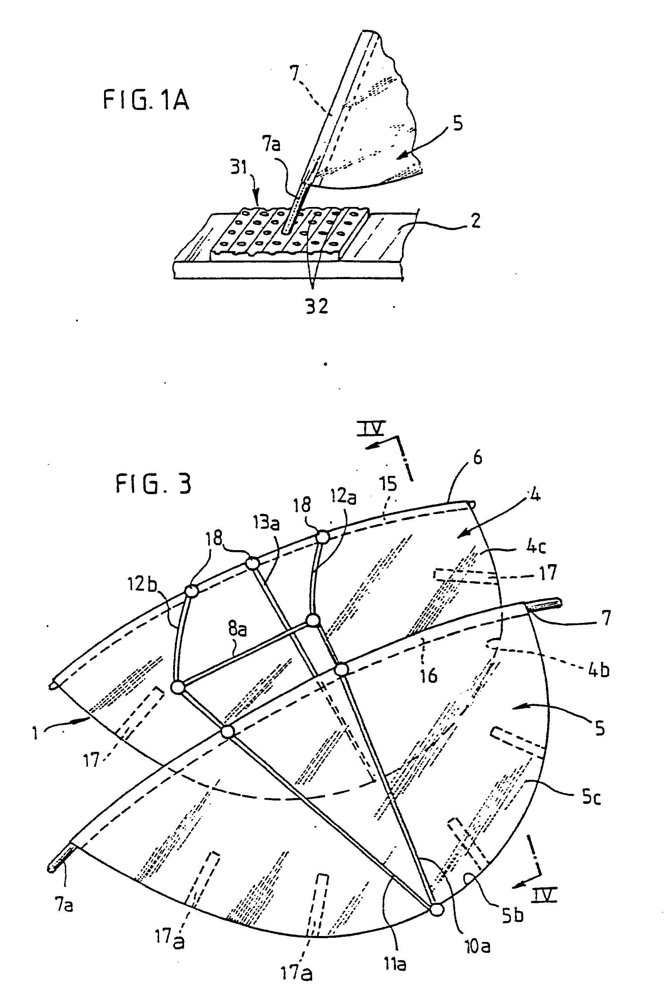

Dans la réalisation des figures 1 et 2 la planche à voile comporte une voilure 1 et une planche 2 pilotées par un utilisateur 3 dont les deux pieds sont en appui sur cette planche et qui maintient la voilure 1 par chacune de ses mains refermées sur deux éléments 8, 10 faisant partie de l'armature de la voilure 1.

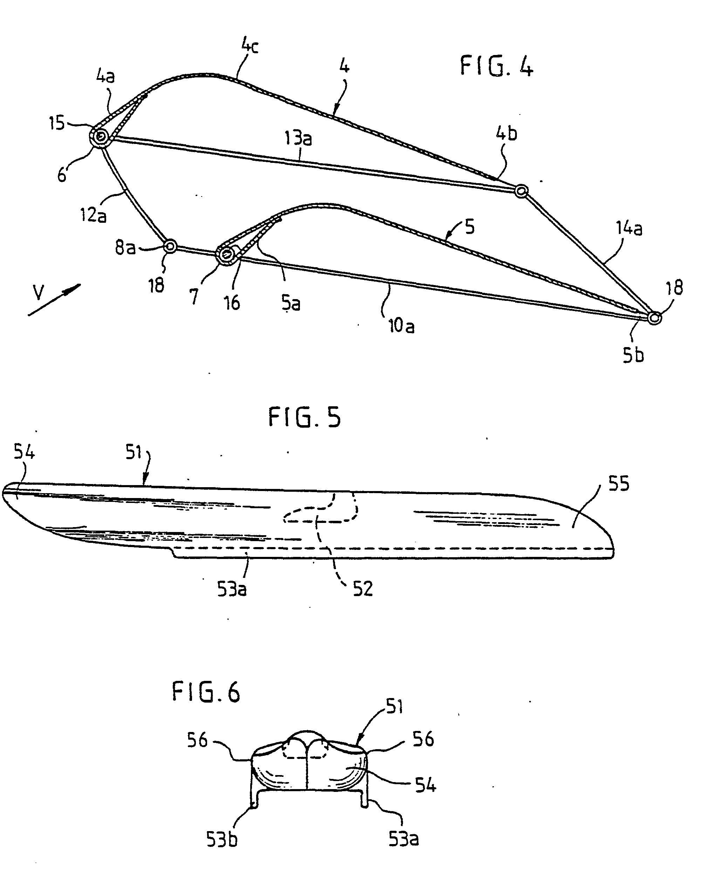

Cette voilure 1 comporte deux ailes 4, 5, chacune constituée d'une toile maintenue par des éléments de l'armature qui est représentée en détail sur les figures 3 et 4 et sur lesquelles on retrouve les deux ailes 4, 5 chacune ayant un bord d'attaque 6, 7 et un bord de fuite 4b, 5b. Ces ailes 4, 5 sont constituées d'une toile 4c, 5c dont le bord d'attaque 6, 7 comporte une gaine cousue 4a, 5a dans laquelle est enfilée une barre tubulaire 15, 16. Le bord de fuite 4b, 5b de chaque aile 4, 5 selon cette représentation présente un contour oval et est lié sensiblement au milieu de ce contour d'une part à une barre tubulaire ou longeron 13a pour l'aile 4 et d'autre part à l'extrémité représentant le sommet d'un triangle 10a, 11a, 8a également constitué de barres tubulaires, liées entre elles par des moyens de serrage 18.

L'armature comporte (figures 3 et 4) outre les deux bords d'attaque ou les barres tubulaires 15, 16, un longeron 13a, un triangle 10a, 11a, 8a deux montants antérieurs 12a, 12b en barre tubulaire cintrée reliées par chacune de leurs extrémités aux bords d'attaque 6, 7 et un montant postérieur 14a lié d'une part à l'extrémité postérieure du longeron 13a et au sommet postérieur du triangle 10a, 11a, 8a. Ces liaisons sont réalisées par des moyens de serrage connus comme, par exemple des noix 18 utilisées dans la réalisation des structures tubulaires légères.

Dans la version représentée sur la figure 3, la partie postérieure de chaque aile 4, 5 comporte en outre un certain nombre de lattes 17a de raidissement engagées dans des poches ménagées dans la toile 4c, 5c. Dans le cas des figures 1 et 2 les lattes 17 sont préformées.

Le plan joignant la ligne moyenne du bord d'attaque 6, 7 et le point médian du bord de fuite 4b, 5b et dénommé par les aérodynamiciens « plan de l'aile ».

Dans la réalisation représentée sur la figure 4, les plans des ailes 4, 5, sont sensiblement parallèles.

Chacune des ailes est sensiblement symétrique par rapport à un plan orthogonal au plan de l'aile, la ligne commune à ces deux plans étant appelée « axe de l'aile ».

L'aile 5 liée au triangle 10a, 11a, 8a sera appelée « aile au vent », l'autre aile 4 « aile sous le vent ». L'aile sous le vent 4 est décalée par rapport à l'aile au vent 5 dans la direction de son axe et dans le sens allant du bord de fuite 4b vers le bord d'attaque 6.

Sur les figures 1 et 1A, on voit en outre qu'une extrémité 7a du bord d'attaque 7 de l'aile 5 est associée mécaniquement avec la planche 2 par engagement dans un réceptacle 31 qui dans cet exemple est constitué d'une multitude d'alvéoles 32 servant à l'accrochage et au positionnement réglable de l'extrémité 7a du bord d'attaque 7 et dont les dimensions sont légèrement supérieures au diamètre de cette extrémité du bord d'attaque 7.

Ces alvéoles 32 peuvent être de formes variées et le réceptacle 31 ainsi constitué s'étend sur une dizaine de centimètres de longueur ou davantage de part et d'autre de l'axe de la planche 2 et sur environ un mètre de longueur ou plus à l'avant du milieu de la planche.

Le pilote 3 peut avoir, mais non obligatoirement, les pieds engagés dans des logements solidaires de la planche 2 constitués de matière souple 21 du genre connu constitué de larges bandes de matière plastique.

.C'est le cas lorsque le pilote 3 utilise une planche 2 dite « de saut » qui outre ses dimensions et son poids réduits comporte de tels logements 21 pour les pieds. Cependant, le pilote 3 peut utiliser toute sorte de planches telles les planches dites « de vitesse » ou « de régate » effilées mais non pourvues de tels logements 21, ou même des planches pour glisser sur le flanc des vagues dites « planches de surf ».

Le fonctionnement de la voilure décrite est le suivant :

Chaque aile 4, 5 (voir figure 4) recevant le vent provenant de la direction représentée à titre d'exemple par la flèche V étant maintenue en 8a et en un point central d'un des côtés 10a, 11a du triangle 10a, 11a, 8a, produit une force, qui en première approche est perpendiculaire au plan de l'aile comprenant le bord d'attaque 6, 7 et le point central du bord de fuite 4b, 5b.

Dans l'utilisation représentée par la figure 1 où l'extrémité du bord d'attaque 7 est associée à la planche 2, la voilure selon l'invention fonctionne en propulsion normale comme une voile classique de planche à voile.

Cependant comme la voilure selon l'invention est constituée de deux ailes 5, 6, à surface totale de toile égale, les dimensions transversales sont réduites.

La maniabilité de cette voilure s'en trouve considérablement améliorée. En particulier les virements de bord s'effectuent très rapidement en soulevant la voilure 1 par dessus la tête de l'utilisateur, en faisant virer la planche 2 avec les pieds puis en engageant l'autre extrémité du bord d'attaque 7 dans le réceptacle 31. Cette opération est notablement plus aisée et plus rapide qu'avec les planches à voiles classiques où le pilote doit obligatoirement progresser vers l'avant de la planche, contourner le mât puis effectuer quelques pas vers l'arrière en saisissant l'autre élément du raidisseur de voile (wishbone).

Compte tenu du faible encombrement de la voilure 1, l'utilisateur peut dresser celle-ci sans difficulté à la verticale pour obtenir la traction maximale.

D'autre part, l'invention permet d'utiliser la voilure 1 sans la relier à la planche 2, comme le montre la figure 2. Le pilote a la possibilité d'orienter la voilure 1 dans les trois dimensions et, en particulier en positionnant judicieusement celle-ci sensiblement à l'horizontale pour produire une force dont la composante verticale ou force de sustentation devient optimale. En particulier cette force de sustentation peut sensiblement équilibrer le poids de la voilure 1. En utilisant judicieusement la force de sustentation, la voilure a un poids apparent très faible, de sorte que l'utilisateur fournit un effort réduit pour maintenir celle-ci.

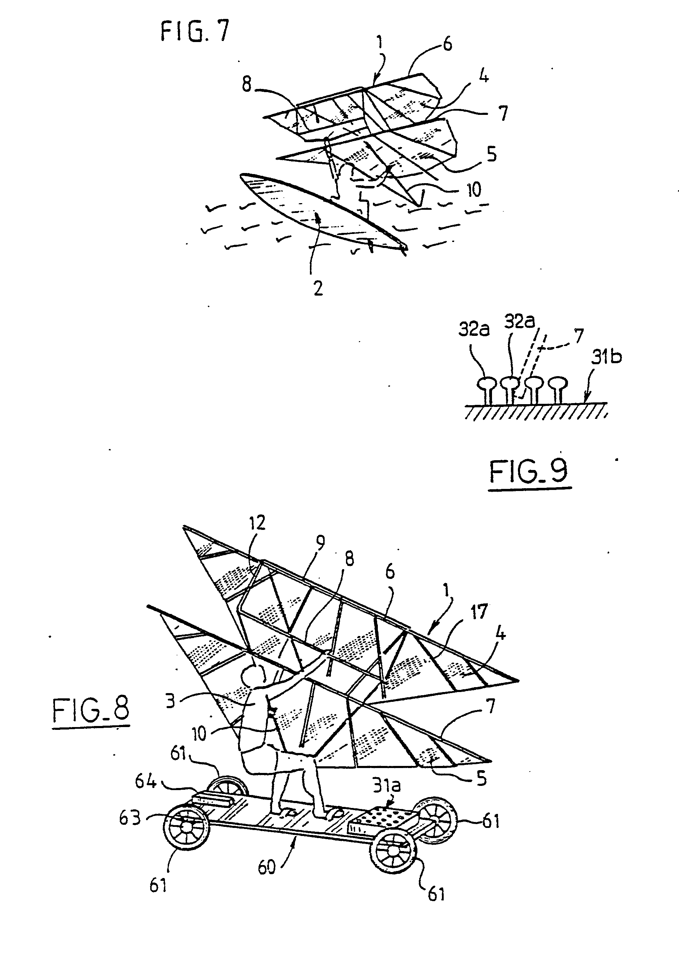

De plus, lorsque le vent est suffisant cette force de sustentation peut atteindre des valeurs importantes et permettre au pilote d'effectuer un saut prolongé en planant pendant plusieurs secondes, le pilote étant suspendu à la voilure 1 dont les bords d'attaque 6, 7 sont sensiblement horizontaux et maintenant la planche 2 soulevée hors de l'eau à l'aide des pieds engagés dans les logements 21 (voir figure 7).

L'utilisation de la voilure 1 indépendamment du support mobile constitué par la planche 2, par tous les vents n'est possible ou est optimisée que grâce à la conception multiplan de celle-ci. En effet, une voile classique monoplan triangulaire présente soit des dimensions réduites et donc une surface utile insuffisante, soit des dimensions classiques permettant la propulsion normale de la planche mais dans ce cas, du fait de ses dimensions la rencontre entre l'extrémité inférieure de la voile et la surface de l'eau est pratiquement inévitable lorsqu'on l'incline presque à la verticale.

D'autre part, par vent faible, la voilure ne se sustentant pas d'elle-même, l'utilisateur d'une voile monoplan ne pourra la porter très longtemps sans le concours d'un appui tel qu'un mât.

Les lattes 17 ou 17a de la voiture 1 servent, comme il est bien connu des marins, à éviter les oscillations du bord de fuite qui réduisent l'efficacité de la voilure.

Les deux barres 10a, 11a du triangle disposées longitudinalement sont saisies alternativement par une main du pilote, qui de l'autre saisit la barre transversale 8a de ce triangle.

Les essais qui ont donné les résultats les plus spectaculaires ont été effectués avec une voilure biplan dont chaque aile a une envergure de 3 m et une profondeur de 1,40 m et est constituée de mousse plastique en feuille genre polyéthylène.

La surface de chaque aile est de 3 m$^2$ soit au total 6 m$^2$ pour la voilure. Cette surface totale peut cependant varier entre 4 et 10 m$^2$.

Les deux ailes expérimentées sont maintenues rigidement l'une par rapport à l'autre par une armature en tubes minces de fibres de verre dont la surface a été glacée par chauffage. Les plans de ces ailes sont sensiblement parallèles et distants de 40 cm. L'aile dite sous le vent est décalée vers l'avant par rapport à l'aile dite au vent de 60 cm.

La voilure complète avec son armature et ses accessoires pèse 6 kg comme une voile complète monoplan triangulaire classique mesurant 4,70 m sur 2,10 m.

Cependant la voilure biplan 1 selon l'invention présente, comme déjà décrit, un avantage spectaculaire de maniabilité dans toutes les circonstances. La demi-hauteur de cette voilure étant de 1,50 m un pilote de taille normale la tient en toutes circonstances aisément hors de l'eau ce qui n'est pas le cas lorsqu'un pilote utilise une voile monoplan triangulaire dont la demi-hauteur est d'au moins 2 m en navigation normale et en effectuant des virements de bord en faisant passer la voile complète d'un bord à l'autre, le mât étant dissocié de la planche.

On a vu ci-dessus l'utilisation de la voilure 1 avec une planche à voile 2 de vitesse ou une planche de saut. Cette voilure peut être utilisée avec toute sorte de support mobile sportif monoplace flottant, roulant ou glissant, sur l'eau, le sol, la neige ou la glace.

Cette voilure est particulièrement intéressante, utilisée en combinaison avec une paire de skis nautiques tels que représentés par les figures 5 et 6.

Ces skis 51 sensiblement identiques présentent chacun une forme allongée pouvant être constituée, par exemple comme les planches à voile en mousse de matière plastique rigidifiée de faible densité revêtue d'une couche de matière plastique d'étanchéité appropriée.

Ces skis nautiques 51 comportent une partie avant 54 en forme d'étrave légèrement relevée, une partie centrale à section sensiblement constante et une partie arrière aplatie 55. Les parois latérales 56 comportent sensiblement entre le tiers avant et l'arrière deux saillies longitudinales aplaties dont la surface extérieure est transversale par rapport à la face supérieure du ski.

Au milieu de cette face supérieure du ski 51 est ménagée une cavité 52 semblable à celle que présente une chaussure.

L'utilisateur engage un pied dans chacune des cavités 52 des deux skis 51, et maintient la voilure biplan comme décrit plus haut.

Le déplacement de ces skis dans l'eau dans la direction longitudinale ne nécessite qu'un effort très faible, alors que le déplacement dans un sens transversal (appelé dérive par les marins) nécessite un effort important.

Les skis connus comportent, comme les planches à voile, généralement un aileron arrière formant une saillie de plusieurs dizaines de centimètres.

Par contre, le ski 51 représenté par les figures 5 et 6, bien que présentant une surface destinée à résister à la dérive dont la valeur est supérieure à celle d'un aileron, forme une saillie de quelques centimètres seulement. L'utilisateur peut très souvent sortir tout un ski de l'eau en se maintenant sur l'autre sans avoir à soulever le ski de la grande hauteur de l'aileron des skis connus.

Ainsi à la manière du skieur sur neige qui remonte une pente « en escalier », le skieur nautique peut remonter le vent « en escalier ». Cet avantage spectaculaire permet, notamment lors des compétitions, au pilote de pouvoir remonter « au vent de sa bouée » sans avoir à virer de bord si par la suite des circonstances il se trouve à quelques mètres sous le vent.

En effet, lors des compétitions nautiques à voile où il faut passer un certain nombre de bouées du bon côté, le pilote qui se trouve, même très légèrement « sous le vent » de la bouée, est obligé d'effectuer au moins deux virements de bords qui provoquent à chaque fois une perte de vitesse notamment du fait que la voilure ne produit plus aucun effet propulsif durant son changement d'orientation par rapport au vent.

D'autre part, les skis tels que représentés aux figures 5 et 6 présentent un encombrement notablement réduit, rendant les manutentions et les transports particulièrement aisés.

Une autre utilisation de la voilure selon l'invention est représentée par la figure 8 qui montre la voilure 1 maintenue par l'utilisateur 3 dont les deux pieds s'appuient sur une planche 60 munie de roues 61. L'essieu arrière 63 est articulé par rapport à l'axe de la planche à l'aide d'un dispositif 64 comme utilisé sur les planches à roulettes qui oriente l'essieu en fonction de l'inclinaison de la planche par rapport à la surface du sol. Cette planche à roues comporte en outre un réceptacle 31a semblable à celui décrit précédemment en référence aux figures 1 et 2.

L'utilisateur peut de la même manière que décrite ci-dessus en combinaison avec une planche nautique utiliser la voilure en propulsion lorsque l'extrémité de la barre de bord d'attaque 16 est engagée dans le réceptacle 31a soit avec une composante de sustentation notable lorsque la voilure est utilisée en forte inclinaison par rapport au sol comme représenté en figure 8.

Le pilote oriente la direction d'avancement de la planche en inclinant celle-ci avec les pieds, comme le fait l'utilisateur de la planche à roulettes et grâce à la disposition biplan de la voilure peut orienter la voilure dans toutes les directions judicieuses sans toucher le sol et, en particulier virer de bord.

La voilure selon l'invention étant constituée de deux ailes 4, 5 maintenues par une armature en tubes à emboîtement associés, liés par des organes de serrage, il est possible en peu de temps de séparer les deux ailes. L'aile au vent 5 comportant la barre de bord d'attaque 16 associée au triangle 10a, 11a, 8a constitue à elle seule une autre voilure indépendante d'efficacité réduite de moitié, pouvant être utilisée comme la voilure biplan, notamment par vent très fort ou par un débutant ou par un enfant.

Ainsi la voilure multiplan peut présenter toute autre forme que celle décrite, et l'armature peut être constituée différemment. Chaque aile peut être constituée de n'importe quel matériau en feuille ou même être rigide. Elle peut présenter un volume et une épaisseur variables et un profil en aile d'avion et notamment du type delta-plane. L'armature peut présenter d'autres formes que celle décrite et peut même être constituée de surfaces ou de volumes profilés.

Par ailleurs, le support mobile peut être tout autre que ceux décrits ; tout support présentant une direction de déplacement à faible frottement privilégiée par rapport aux autres directions à forte résistance conviendrait même si le pilote ne peut orienter la direction privilégiée avec l'action des pieds.

Le dispositif d'association mécanique du support destiné à coopérer avec une extrémité du bord d'attaque de l'aile peut être tout autre que ceux décrits. Ainsi le support 31b, de la figure 9, comporte des champignons en caoutchouc 32a qui peuvent retenir l'extrémité 7 de la barre de bord d'attaque de la voilure.

**Revendications**

1. Voilure (1) à usage sportif, manœuvrable à la main pour permettre la propulsion et/ou le vol par sustentation aérodynamique selon l'orientation de ladite voilure en fonction du vent et par rapport à un support mobile pour l'utilisateur permettant le glissement ou le roulement sur une surface tel qu'une planche à voile (2), caractérisée en ce qu'elle est du genre multiplan et comprend au moins deux ailes (4, 5) décalées l'une par rapport à l'autre, les bords d'attaque (6, 7) de celles-ci étant sensiblement parallèles.

2. Voilure conforme à la revendication 1, caractérisée en ce que les deux ailes (4, 5) sont décalées l'une par rapport à l'autre dans un sens transversal relativement à leurs bords d'attaque (6, 7).

3. Voilure conforme à l'une des revendications 1 ou 2, caractérisée en ce que les deux ailes (4, 5) ont sensiblement la même surface.

4. Voilure conforme à l'une des revendications 1 ou 2, caractérisée en ce que l'une des deux ailes (5) a une envergure sensiblement plus grande que l'autre (4).

5. Voilure conforme à l'une des revendications 1 à 4, caractérisée en ce que la surface portante globale des ailes est sensiblement comprise entre 4 et 10 m².

6. Voilure conforme à l'une des revendications 1 à 5, caractérisée en ce que l'une au moins des ailes (4, 5) comporte un bord d'attaque (6, 7) sensiblement rectiligne et un bord de fuite (4b, 5b) à contour ovalisé.

7. Voilure conforme à l'une des revendications 1 à 6, caractérisée en ce que l'une au moins des ailes (4, 5) est réalisée en une matière de flottabilité positive, telle qu'une mousse plastique.

8. Voilure conforme à l'une des revendications 1 à 7, caractérisée en ce que les deux ailes (4, 5) sont reliées par une armature rigide 10a, 12a, 13a, 14a, 15, 16) assurant un positionnement relatif constant, cette armature comportant des moyens de préhension (8, 10) pour l'utilisateur.

9. Voilure conforme à la revendication 8, caractérisée en ce que l'armature est démontable et réalisée au moyen de tubes à emboîtement associés à des moyens de serrage (18), le bord d'attaque (6, 7) de l'une au moins des ailes (4, 5) comportant une gaine (4a, 5a) dans laquelle est enfilée une barre de bord d'attaque (15, 16).

10. Engin composite comprenant une voilure conforme à l'une des revendications 1 à 9, associée à au moins un support (2, 60) permettant le glissement (tel que planche à surf ou à voile, skis nautiques, de neige, traineau à glace, patins à glace, luge à neige) ou le roulement (tel que char à voile, planche à roulettes, patins à roulettes), caractérisé en ce que le support (2, 60) comporte des moyens d'accrochage (21) pour les pieds de l'utilisateur (3) permettant son décollage en position de vol aérodynamique.

11. Engin composite conforme à la revendication 10, caractérisé en ce que le support mobile (2, 60) comporte un dispositif d'association mécanique (31, 31a) destiné à coopérer avec l'une (7a) des extrémités de la barre de bord d'attaque (16) de l'une des ailes (5) de la voilure (1), pour permettre le réglage de la position de la voilure sur le support mobile.

12. Engin composite conforme à la revendication 11, caractérisé en ce que le dispositif d'association mécanique (31, 31a) comporte une multitude d'alvéoles (32) destinées à recevoir l'extrémité (7a) de la barre de bord d'attaque (16) de l'aile (5).

## Claims

1. Sail unit (1) for the purpose of sport, which is operable by hand in order to permit propulsion and/or flight by air sustentation according to the orientation of said sail unit as a function of the wind and with respect to a moving support for carrying the user, permitting sliding or rolling on a surface, such as windsurfing board (2), characterized in that it is of the multiplane type and comprises at least two wings (4, 5) in relatively displaced relátion to each other, the leading edges (6, 7) thereof being substantially parallel.

2. Sail unit in accordance with claim 1, characterized in that the two wings (4, 5) are displaced with respect to each other in a transverse direction relatively to their leading edges (6, 7).

3. Sail unit in accordance with either claim 1 or claim 2, characterized in that the two wings (4, 5) have substantially the same surface area.

4. Sail unit in accordance with either claim 1 or claim 2, characterized in that one of the two wings (5) has a substantially greater span that the other (4).

5. Sail unit in accordance with any one of claims 1 to 4, characterized in that the total sail area of the wings is substantially within the range of 4 to 10 m².

6. Sail unit in accordance with any one of claims 1 to 5, characterized in that at least one of the wings (4, 5) has a substantially rectilinear leading edge (6, 7) and a trailing edge (4b, 5b) having an ovalized contour.

7. Said unit in accordance with any one of claims 1 to 6, characterized in that at least one of the wings (4, 5) is formed of material having positive buoyancy such as a plastic foam.

8. Sail unit in accordance with any one of claims 1 to 7, characterized in that the two wings (4, 5) are connected together by a rigid supporting frame (10a, 12a, 13a, 14a, 15, 16) for ensuring a constant relative positioning, this supporting frame being provided with gripping means (8, 10) for the user.

9. Sail unit in accordance with claim 8, characterized in that the supporting frame can be disassembled and is formed by means of interfitting tubes associated with clamping means (18), the leading edge (6, 7) of at least one of the wings (4, 5) being provided with a sheath (4a, 5a) in which is inserted a leading-edge rod (15, 16).

10. Composite device comprising a sail unit in accordance with any one of claims 1 to 9, associated with at least one support (2, 60) which permits sliding motion (such as a surf-board or windsurfing board, water-skis, snow skis, ice sledge, ice skates, snow toboggan) or rolling motion (such as a sailcar, skate-board, roller skates), characterized in that the support (2, 60) comprises fastening means (21) for the feet of the user (3) so as to enable the user to take-off in the position of aerodynamic flight.

11. Composite device in accordance with claim 10, characterized in that the moving support (2, 60) comprises a mechanical association device (31, 31a) which is intended to cooperate with one end (7a) of the leadingedge rod (16) of one of the wings (5) of the sail unit (1) in order to permit adjustment of the position of the sail unit on the moving support.

12. Composite device in accordance with claim 11, characterized in that the mechanical association device (31, 31a) comprises a plurality of recesses (32) which are intended to receive the end (7a) of the leadingedge rod (16) of the wing (5).

## Patentansprüche

1. Rigg (1) für Sportzwecke, welches manuell manövrierbar ist, um den Vorschub und/oder das Fliegen durch aerodynamisches Schweben je nach der Orientierung des Riggs in Abhängigkeit vom Wind sowie in bezug auf einen beweglichen Träger des Benutzers zu gestatten, der das Gleiten oder Rollen auf einer Oberfläche gestattet, beispielsweise ein Segelbrett (2), dadurch gekennzeichnet, daß es von der Art mit Mehrfachebenen ist und wenigstens zwei Flügel (4, 5) umfaßt, welche gegeneinander versetzt sind, wobei die Angriffskanten (6, 7) derselben im wesentlichen parallel sind.

2. Rigg nach Anspruch 1, dadurch gekennzeichnet, daß die zwei Flügel (4, 5) gegeneinander in Querrichtung relativ zu ihren Angriffskanten (6, 7) versetzt sind.

3. Rigg nach Anspruch 1 oder 2, dadurch gekennzeichnet, daß die zwei Flügel (4, 5) im wesentlichen dieselbe Oberfläche besitzen.

4. Rigg nach Anspruch 1 oder 2, dadurch gekennzeichnet, daß einer der zwei Flügel (5) eine beträchtlich grössere Spannweite als der andere (4) aufweist.

5. Rigg nach einem der Ansprüche 1 bis 4, dadurch gekennzeichnet, daß die gesamte tragende Oberfläche der Flügel im wesentlichen zwischen 4 und 10 qm beträgt.

6. Rigg nach einem der Ansprüche 1 bis 5, dadurch gekennzeichnet, daß wenigstens einer der Flügel (4, 5) eine im wesentlichen geradlinige Angriffskante (6, 7) und eine Abströmkante (4b, 5b) von ovaler Kontur aufweist.

7. Rigg nach einem der Ansprüche 1 bis 6, dadurch gekennzeichnet, daß wenigstens einer der Flügel (4, 5) aus einem Material von positiver Schwimmfähigkeit, wie ein plastischer Schaum, hergestellt ist.

8. Rigg nach einem der Ansprüche 1 bis 7, dadurch gekennzeichnet, daß die zwei Flügel (4, 5) durch eine starre Bewehrung (10a, 12a, 13a, 14a, 15, 16) verbunden sind, welche eine konstante relative Positionierung gewährleistet, wobei diese Bewehrung Greifmittel (8, 10) für den Benutzer umfaßt.

9. Rigg nach Anspruch 8, dadurch gekennzeichnet, daß die Bewehrung demontierbar ist und durch ineinandersteckbare Rohre verwirklicht ist, welche Spannmitteln (18) zugeordnet sind, wobei die Angriffskante (6, 7) wenigstens eines Flügels (4, 5) eine Hülle (4a, 5a) umfaßt, in welche ein Stab der Angriffskante (15, 16) eingeschoben ist.

10. Zusammengesetztes Fahrgerät mit einem Rigg nach einem der Ansprüche 1 bis 9, welches wenigstens einem Träger (2, 60) zugeordnet ist, der das Gleiten gestattet (beispielsweise ein Surfbrett oder Segelbrett, Wasserski, Schnee-Ski, Eisschlitten, Schlittschuhe, Schnee-Schlitten) oder das Rollen gestattet (beispielsweise ein Segel-Wagen, Rollbrett, Rollschuhe), dadurch gekennzeichnet, daß der Träger (2, 60) Einhakmittel (21) für die Füße des Benutzers (3) umfaßt, welche sein Abheben in die aerodynamische Fluglage gestatten.

11. Zusammengesetztes Fahrgerät nach Anspruch 10, dadurch gekennzeichnet, daß der bewegliche Träger (2, 60) eine Vorrichtung (31, 31a) zur mechanischen Zuordnung umfaßt, welche dazu bestimmt ist, mit einem (7a) der Enden der Stange an der Angriffskante (16) eines der Flügel (5) des Riggs (1) zusammenzuwirken, um die Einstellung des Riggs auf dem beweglichen Träger zu gestatten.

12. Zusammengesetztes Fahrgerät nach Anspruch 11, dadurch gekennzeichnet, daß die Vorrichtung (31, 31a) zur mechanischen Zuordnung eine Mehrzahl von Sacklöchern (32) umfaßt, die dazu bestimmt sind, das Ende (7a) der Stange der Angriffskante (16) des Flügels (5) aufzunehmen.

FIG. 1

FIG. 2

FIG.1A

FIG. 3

FIG. 4

FIG. 5

FIG. 6

FIG. 7

FIG. 9

FIG. 8